# EUROPEAN PATENT SPECIFICATION

(11) **EP 3 677 777 B1**
(45) Date of publication and mention of the grant of the patent: **22.03.2023**
(21) Application number: 18851413.7
(22) Date of filing: 18.07.2018
(51) Int. Cl.: F04B 39/00, F04B 45/04, F16F 3/04, F04B 53/00, F04D 29/60, F04D 29/66

(54) **ELASTIC SUPPORT STRUCTURE**
ELASTISCHE STÜTZSTRUKTUR
STRUCTURE SUPPORT ÉLASTIQUE

(30) Priority: 28.08.2017 JP 2017163679
(43) Date of publication of application: 08.07.2020
(73) Proprietor: Panasonic Intellectual Property Management Co., Ltd., Osaka-shi, Osaka 540-6207 (JP)
(72) Inventor: MIHARA, Ryusuke, Osaka-shi Osaka 540-6207 (JP); YAMAMOTO, Kohei, Osaka-shi Osaka 540-6207 (JP)
(74) Representative: Grünecker Patent- und Rechtsanwälte PartG mbB
(86) International application number: PCT/JP2018/026970
(87) International publication number: WO 2019/044234

(56) References cited:
- EP-A1- 0 555 983
- EP-A1- 1 380 752
- WO-A2-2012/140590
- DE-A1-102010 038 871
- JP-U- S5 490 869
- JP-U- S50 121 308
- JP-U- S52 141 609
- US-A- 2 028 985
- US-A- 2 741 425
- US-A- 2 772 047

## Description

### TECHNICAL FIELD

The present disclosure relates to an elastic support structure.

### BACKGROUND ART

Use of an elastic body to support a vibrating structure has been studied so far. For example, an elastic body made of rubber is described in PTL 1 to support a vibrating structure. The elastic body described in PTL 1 can suppress propagation of vibration from the structure.

PTL 2 discloses a vacuum plant of an electron microscope wherein a pump for exhausting a vacuum tank is suspended in the interior of said vacuum tank by resilient means for reducing the noise of said pump if being in operation.

PTL 3 discloses in a photocopying and/or printing machine, the blower or fan used for internal ventilation is suspended from the structure of the machine by means of springs slung between the blower casing and the machine structure to eliminate the transmission of vibrations to delicate members in the machine itself.

PTL 4 discloses an elastic support structure according to the preamble of independent claim 1.

### Citation List

### Patent Literature

PTL 1: Japanese Utility Model Registration No. 3,155,810
PTL 2: US 2 772 047 A
PTL 3: EP 0 555 983 A1
PTL 4: DE 10 2010 038871 A1

### SUMMARY

According to a study conducted by the present inventors, the technique disclosed in PTL 1 admits of improvement for suppressing the propagation of vibration from the structure, particularly along a vibration axis.

An elastic support structure according to an aspect of the present disclosure includes a first spring, a second spring, a third spring, a fourth spring, and an object that includes a blower having a vibration axis.

The object is suspended by the first spring, the second spring, the third spring, and the fourth spring.

The first spring is connected to a first position of the object. The second spring is connected to a second position of the object. The third spring is connected to a third position of the object. The fourth spring is connected to a fourth position of the object.

When viewed vertically from above, a virtual quadrangle is defined with the first position, the second position, the third position, and the fourth position being connected by virtual line segments.

The first spring extends from the first position in a first direction to be away from the quadrangle. The second spring extends from the second position in a second direction to be away from the quadrangle. The third spring extends from the third position in a third direction to be away from the quadrangle. The fourth spring extends from the fourth position in a fourth direction to be away from the quadrangle.

The first direction, the second direction, the third direction, and the fourth direction are each 45 degrees or more off a direction along the vibration axis.

The technique according to the present disclosure enables effective suppression of propagation of vibration from a blower. The technique particularly enables effective suppression of propagation of vibration along the vibration axis.

### BRIEF DESCRIPTION OF THE DRAWINGS

FIG. 1A is a perspective view of an elastic support structure according to an exemplary embodiment.
FIG. 1B schematically illustrates a diaphragm.
FIG. 2A schematically illustrates springs.
FIG. 2B schematically illustrates the springs.
FIG. 3 is a graph showing a relationship between spring angles θz1 to θz4 and a vibration acceleration level along a Z-axis.
FIG. 4 is a graph showing a relationship between spring angles θx1 to θx4 and a vibration acceleration level along an X-axis.

### DESCRIPTION OF EMBODIMENT

Placing a blower directly on a mount such as a floor or a bottom of a housing causes vibration from the blower to propagate to the mount. For the purpose of reducing this propagation of vibration, supporting the blower with an elastic body is conceivable.

When a rubber which is a type of elastic body is interposed between the blower and the mount, the rubber reduces the propagation of vibration from the blower to the mount.

It is desirable that the propagation of vibration be reduced further. The present inventors have considered using a spring to reduce the propagation of vibration. However, according to the study conducted by the present inventors, even if the spring is interposed between the blower and the mount, the propagation of vibration cannot be sufficiently reduced.

There are specifically a spring with a high spring constant, and a spring with a low spring constant. The spring with the high spring constant is a stiff spring and cannot sufficiently reduce the propagation of vibration. The spring with the low spring constant buckles or experiences compressive deformation between the blower and the mount and thus has an impaired function. Therefore, the propagation of vibration cannot be sufficiently reduced.

The present inventors have considered suspending the blower with a plurality of springs. Thus no buckling is caused even if the springs having a low spring constant are used. For this reason, the suspension is suitable for reduction of the propagation of vibration.

However, there is another problem with suspending the blower with four vertically extending springs. Specifically, the blower swings like a pendulum during transportation in such a suspension structure.

The present inventors have considered suspending the blower with four springs that each extend in a direction off a vertical direction. Such a suspending method is suitable for reduction of swinging.

However, when the springs each extend in the direction off the vertical direction, there are cases where the propagation of vibration cannot be successfully reduced. Specifically, the blower can vibrate most in one direction (in a principal vibration direction) rather than vibrate evenly in all directions. If the principal vibration direction is close to the direction in which each of the springs extends, the vibration from the blower in the principal vibration direction may not be successfully reduced.

An elastic support structure according to a first aspect of the present invention includes a first spring, a second spring, a third spring, a fourth spring, and an object that includes a blower having a vibration axis, wherein the blower includes a diaphragm, and the diaphragm vibrates along the vibration axis.

The object is suspended by the first spring, the second spring, the third spring, and the fourth spring.

The first spring is connected to a first position of the object. The second spring is connected to a second position of the object.

The third spring is connected to a third position of the object. The fourth spring is connected to a fourth position of the object.

When viewed vertically from above, a virtual quadrangle is defined with the first position, the second position, the third position, and the fourth position being connected by virtual line segments.

The first spring extends from the first position in a first direction to be away from the quadrangle. The second spring extends from the second position in a second direction to be away from the quadrangle. The third spring extends from the third position in a third direction to be away from the quadrangle. The fourth spring extends from the fourth position in a fourth direction to be away from the quadrangle.

The first direction, the second direction, the third direction, and the fourth direction are each more than 45 degrees off a direction along the vibration axis.

The first direction, the second direction, the third direction, and the fourth direction each form an angle ranging between 30 degrees and 75 degrees, inclusive, with a vertical direction.

While being based on the first aspect, an elastic support structure according to a second aspect of the present disclosure is such that the first direction, the second direction, the third direction, and the fourth direction each form an identical angle with a vertical direction. The quadrangle viewed vertically from above is a rectangle including a first side and a second side.

The first spring and the fourth spring that extend are symmetric with respect to a straight line passing parallel to the first side through a center of the quadrangle, and the second spring and the third spring that extend are symmetric with respect to the straight line passing parallel to the first side through the center of the quadrangle. The first spring and the second spring that extend are symmetric with respect to a straight line passing parallel to the second side through the center of the quadrangle, and the third spring and the fourth spring that extend are symmetric with respect to the straight line passing parallel to the second side through the center of the quadrangle.

While being based on the first aspect, an elastic support structure according to a third aspect of the present disclosure is such that a resonance frequency of the first spring, a resonance frequency of the second spring, a resonance frequency of the third spring, and a resonance frequency of the fourth spring are all lower than a frequency that drives the blower between a starting operation and a stopping operation.

With reference to the drawings, a description is hereinafter provided of an exemplary embodiment of the present disclosure. The present disclosure is not limited to the following exemplary embodiment.

In the following description, terms such as "X-axis", "Y-axis", "Z-axis", and "blower" are used. The X-axis, the Y-axis, and the Z-axis are orthogonal to one another. The "blower" encompasses any air supply device that has a vibration axis, such as an air blower, a pump, or a compressor.

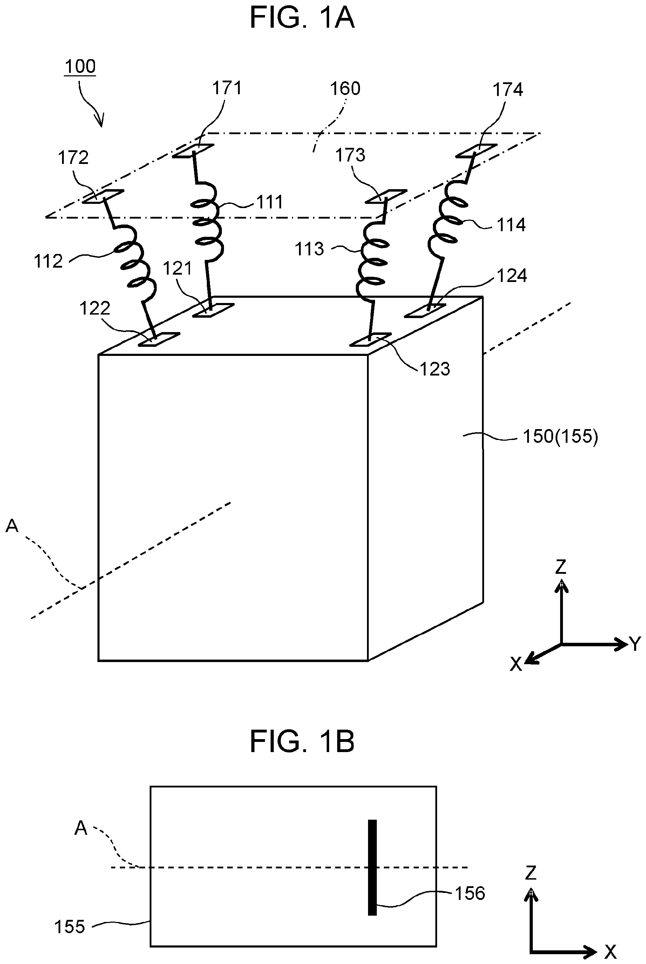

FIG. 1A is a perspective view of elastic support structure 100 according to the present exemplary embodiment. Elastic support structure 100 includes spring 111, spring 112, spring 113, spring 114, object 150, and fixed part 160. Springs 111, 112, 113, and 114 correspond to the first spring, the second spring, the third spring, and the fourth spring, respectively.

Publicly known springs can be used as springs 111, 112, 113, and 114. In the present exemplary embodiment, springs 111, 112, 113, and 114 are coil springs.

Object 150 includes blower 155 that has vibration axis A. Vibration axis A extends along a principal vibration direction of blower 155. The principal vibration direction of blower 155 is a direction in which blower 155 vibrates most. In the FIG. 1A example, vibration axis A extends along the X-axis.

As illustrated in FIG. 1B, blower 155 includes diaphragm 156 in the present exemplary embodiment. The direction along vibration axis A, or the principal vibration direction is a vibration direction of diaphragm 156. Blower 155 using diaphragm 156 can pump air out when diaphragm 156 vibrates. Blower 155 using diaphragm 156 has an advantage of consuming a smaller amount of power.

In cases where blower 155 includes two or more parallel diaphragms, these diaphragms have the same principal vibration direction, and it is vibration axis A that extends along this direction.

Object 150 is suspended from fixed part 160 by springs 111, 112, 113, and 114. In other words, elastic support structure 100 is a suspension structure using these springs. This structure suppresses propagation of vibration from blower 155 to fixed part 160, thus being suited to reduce noise. Rigidity is desirably ensured for fixed part 160.

Spring 111 has one end connected to position 121 of an upper surface of object 150. Spring 112 has one end connected to position 122 of the upper surface of object 150. Spring 113 has one end connected to position 123 of the upper surface of object 150. Spring 114 has one end connected to position 124 of the upper surface of object 150. Positions 121, 122, 123, and 124 correspond to the first position, the second position, the third position, and the fourth position, respectively.

Spring 111 has its other end connected to position 171 of fixed part 160. Spring 112 has its other end connected to position 172 of fixed part 160. Spring 113 has its other end connected to position 173 of fixed part 160. Spring 114 has its other end connected to position 174 of fixed part 160.

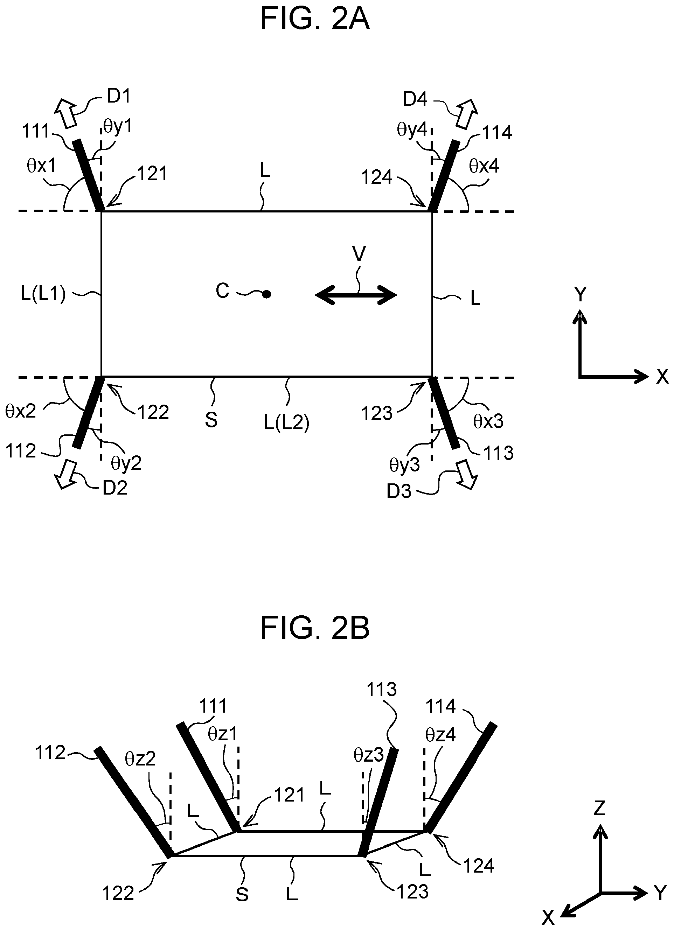

FIG. 2A schematically illustrates springs 111 to 114 as viewed vertically from above. Springs 111 to 114 schematically illustrated in FIG. 2B are viewed in the same direction as in FIG. 1A.

As FIG. 2A illustrates, when positions 121, 122, 123, and 124 are connected in the order 121-122-123-124-121 by virtual line segments L, virtual quadrangle S is defined, as viewed vertically from above. In the present exemplary embodiment, quadrangle S is a rectangle parallel to a horizontal plane.

When viewed vertically from above, spring 111 extends from position 121 in direction D1 to be away from quadrangle S. Spring 112 extends from position 122 in direction D2 to be away from quadrangle S. Spring 113 extends from position 123 in direction D3 to be away from quadrangle S. Spring 114 extends from position 124 in direction D4 to be away from quadrangle S.

Directions D1, D2, D3, and D4 correspond to the first direction, the second direction, the third direction, and the fourth direction, respectively.

Each of the respective directions in which the springs 111 to 114 extend is off a vertical direction in this manner, so that blower 155 swings less. With its direction being off the vertical direction, each of the springs advantageously suppresses propagation of vibration to fixed part 160.

When viewed vertically from above, directions D1, D2, D3, and D4 are each 45 degrees or more off direction V along vibration axis A. According to the present exemplary embodiment, direction V along vibration axis A is not close to the respective directions in which springs 111 to 114 extend. Therefore, propagation of vibration from blower 155 along vibration axis A can be sufficiently suppressed.

In FIG. 2A, marks are used to describe directions D1 to D4. Specifically, angles θx1, θx2, θx3, and θx4 are all greater than or equal to 45 degrees but less than 90 degrees, and angles θy1, θy2, θy3, and θy4 are all greater than 0 degrees but less than or equal to 45 degrees.

It is to be noted here that angle θx1 is an angle which direction D1 makes with a line connecting position 121 and position 124. Angle θy1 is an angle which direction D1 makes with a line connecting position 121 and position 122. Angle θx2 is an angle which direction D2 makes with a line connecting position 122 and position 123. Angle θy2 is an angle which direction D2 makes with the line connecting position 121 and position 122.

Angle θx3 is an angle which direction D3 makes with the line connecting position 122 and position 123. Angle θy3 is an angle which direction D3 makes with a line connecting position 123 and position 124. Angle θx4 is an angle which direction D4 makes with the line connecting position 121 and position 124. Angle θy4 is an angle which direction D4 makes with the line connecting position 123 and position 124.

When viewed vertically from above, directions D1, D2, D3, and D4 may each be 45 degrees or more, or even 60 degrees or more off direction V along vibration axis A.

In other words, angles θx1 to θx4 and θy1 to θy4 may all be 45 degrees. Angles θx1 to θx4 may all be greater than 45 degrees but less than 90 degrees, while angles θy1 to θy4 may all be greater than 0 degrees but less than 45 degrees. Angles θx1 to θx4 may all be greater than or equal to 60 degrees but less than 90 degrees, while angles θy1 to θy4 may all be greater than 0 degrees but less than or equal to 30 degrees.

As FIG. 2B illustrates, a distance between the respective upper ends of springs 111 and 112 is greater than a distance between the respective lower ends of springs 111 and 112. A distance between the respective upper ends of springs 111 and 113 is greater than a distance between the respective lower ends of springs 111 and 113. A distance between the respective upper ends of springs 111 and 114 is greater than a distance between the respective lower ends of springs 111 and 114.

A distance between the respective upper ends of springs 112 and 113 is greater than a distance between the respective lower ends of springs 112 and 113. A distance between the respective upper ends of springs 112 and 114 is greater than a distance between the respective lower ends of springs 112 and 114. A distance between the respective upper ends of springs 113 and 114 is greater than a distance between the respective lower ends of springs 113 and 114.

In one example, the direction in which spring 111 extends, the direction in which spring 112 extends, the direction in which spring 113 extends, and the direction in which spring 114 extends each form an angle ranging between 30 degrees and 75 degrees, inclusive, with the vertical direction.

Angle θz1 is an angle formed by the vertical direction and the direction in which spring 111 extends. Angle θz2 is an angle formed by the vertical direction and the direction in which 112 extends. Angle θz3 is an angle formed by the vertical direction and the direction in which spring 113 extends. Angle θz4 is an angle formed by the vertical direction and the direction in which spring 114 extends.

In other words, angles θz1, θz2, θz3, and θz4 that are illustrated in FIG. 2B all range between 30 degrees and 75 degrees, inclusive.

An example of an idea for setting angles θz1 to θz4 is given below. In order to suppress vertical propagation of vibration from blower 155 to fixed part 160 via springs 111 to 114, each of angles θz1 to θz4 is desirably closer to 90 degrees. In other words, the respective directions in which springs 111 to 114 extend are desirably closer to a horizontal direction.

On the other hand, if angles θz1 to θz4 are close to 90 degrees, springs 111 to 114 cannot withstand weight of blower 155. Therefore, it is desirable that each of angles θz1 to θz4 be set within an appropriate range in order for springs 111 to 114 to well support blower 155 as well as to suitably suppress the vertical propagation of vibration.

The range between 30 degrees and 75 degrees, inclusive is an example of such a range, although characteristics of springs 111 to 114, limitation of space for springs 111 to 114, and others are influential.

A person skilled in the art who has a design concept for setting angles θz1 to θz4 and the characteristics of springs 111 to 114 while comprehensively considering the limitation of space, the weight of blower 155, and the others will readily set angles θz1 to θz4 and the characteristics of springs 111 to 114.

Specifically, such a person skilled in the art can set angles θz1 to θz4 and the characteristics (resonance frequencies and spring constants) of springs 111 to 114 so that springs 111 to 114 fit in a given space, can stably support blower 155 and appropriately suppress propagation of vibration.

In the present exemplary embodiment, the respective directions in which springs 111 to 114 extend each form an identical angle with the vertical direction as illustrated in FIG. 2B. As FIG. 2A illustrates, quadrangle S is the rectangle having sides L1 and L2 that are orthogonal to each other when viewed vertically from above. Sides L1 and L2 correspond to the first side and the second side, respectively.

When viewed vertically from above, extending springs 111 and 114 are symmetric with respect to a straight line passing parallel to side L1 through center C of quadrangle S, and extending springs 112 and 113 are symmetric with respect to the straight line passing parallel to side L1 through center C of quadrangle S. When viewed vertically from above, extending springs 111 and 112 are symmetric with respect to a straight line passing parallel to side L2 through center C of quadrangle S, and extending springs 113 and 114 are symmetric with respect to the straight line passing parallel to side L2 through center C of quadrangle S.

When angles θx1 to θx4, θy1 to θy4, and θz1 to θz4 are used to express the above, angles θx1 to θx4 are all equal, angles θy1 to θy4 are all equal, and angles θz1 to θz4 are all equal. Disposed springs 111 to 114 thus have high symmetry in the present exemplary embodiment. With this structure, blower 155 can be suspended stably.

In the present exemplary embodiment, sides L1 and L2 are respectively a short side and a long side of quadrangle S, which is the rectangle. Side L1 extends along the Y-axis, and side L2 extends along the X-axis.

The above symmetry is not necessarily necessary for the elastic support structure. Angles θx1 to θx4 do not all have to be equal. Angles θy1 to θy4 do not all have to be equal. Angles θz1 to θz4 do not all have to be equal.

In the present exemplary embodiment, the respective resonance frequencies of springs 111 to 114 are all lower than a frequency at which blower 155 is driven between the starting operation and the stopping operation. Using soft springs 111 to 114 in this structure can ensure a difference between the resonance frequency of each of springs 111 to 114 and the frequency that drives blower 155. Thus resonance due to natural vibration can be prevented.

Consequently, those that are attributable to stiffness of springs 111 to 114, such as insufficient suppression of propagation of vibration and resonance due to natural vibration, can be prevented.

The starting operation mentioned here means increasing a drive frequency of blower 155 to a frequency at which blower 155 can properly pump air out. The stopping operation means decreasing the drive frequency of blower 155 to stop blower 155. The frequency at which blower 155 is driven between the starting operation and the stopping operation typically corresponds to a drive frequency during rated operation of blower 155.

### [Experimental Example 1]

Elastic support structure 100 described with reference to FIGS. 1A to 2B was made. In Experimental Example 1, angles θx1 to θx4, angles θy1 to θy4, and angles θz1 to θz4 were all set at 45 degrees. The rated operation of blower 155 was performed in this condition, and a vibration acceleration level along the X-axis (in the principal vibration direction, or along vibration axis A) and a vibration acceleration level along the Z-axis were evaluated at fixed part 160.

Blower 155 of elastic support structure 100 operated at a predetermined drive frequency during the rated operation. The vibration acceleration levels evaluated in Experimental Example 1 were vibration acceleration levels at the predetermined drive frequency. The same was true of Experimental Examples 2 to 4.

### [Experimental Example 2]

Angles θx1 to θx4 were all set at 90 degrees, angles θy1 to θy4 were all set at 0 degrees, and angles θz1 to θz4 were all set at 32 degrees. As in Experimental Example 1, an X-axis vibration acceleration level and a Z-axis vibration acceleration level were evaluated at fixed part 160.

### [Experimental Example 3]

Angles θx1 to θx4 were all set at 33 degrees, angles θy1 to θy4 were all set at 57 degrees, and angles θz1 to θz4 were all set at 56 degrees. As in Experimental Example 1, an X-axis vibration acceleration level and a Z-axis vibration acceleration level were evaluated at fixed part 160.

### [Experimental Example 4]

Angles θx1 to θx4 were all set at 30 degrees, angles θy1 to θy4 were all set at 60 degrees, and angles θz1 to θz4 were all set at 75 degrees. As in Experimental Example 1, a Z-axis vibration acceleration level was evaluated at fixed part 160.

Summarized in Table 1 are angles θx1 to θx4, angles θy1 to θy4, and angles θz1 to θz4 set in Experimental Examples 1 to 4.

**[Table 1]**

| | θx1∼θx4 (deg) | θy1∼θy4 (deg) | θz1∼θz4 (deg) |
|---|---|---|---|
| Experimental example 2 | 90 | 0 | 32 |
| Experimental example 1 | 45 | 45 | 45 |
| Experimental example 3 | 33 | 57 | 56 |
| Experimental example 4 | 30 | 60 | 75 |

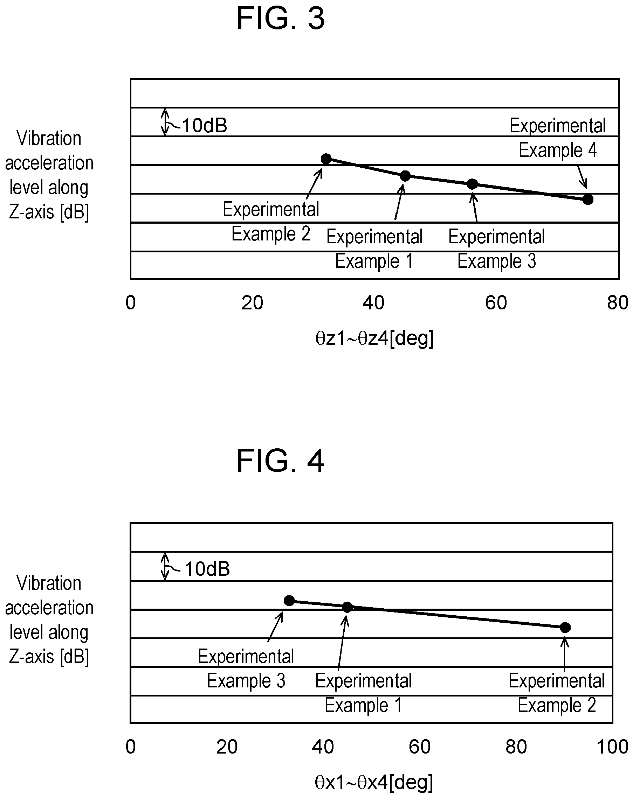

FIG. 3 is a graph showing results of the evaluation of the Z-axis vibration acceleration levels in Experimental Examples 1 to 4. FIG. 4 is a graph showing results of the evaluation of the X-axis vibration acceleration levels in Experimental Examples 1 to 4.

As shown in FIG. 3, as angles θz1 to θz4 each increase toward 90 degrees, the Z-axis vibration acceleration level decreases. The FIG. 3 data show that angles θz1 to θz4 are desirably closer to 90 degrees each in order to suppress vertical propagation of vibration from blower 155 to fixed part 160 via springs 111 to 114.

In other words, it is desirable from this point of view that the respective directions in which springs 111 to 114 extend be closer to the horizontal direction. On the other hand, if angles θz1 to θz4 are each close to 90 degrees, springs 111 to 114 cannot withstand the weight of blower 155.

In this regard, Experimental Example 4 shows that a structure having angles θz1 to θz4 of 75 degrees each is feasible. When this is taken into consideration, a range having an upper limit of 75 degrees can serve as an example of the range of each of angles θz1 to θz4 in order for springs 111 to 114 to well support blower 155 as well as to suitably suppress the vertical propagation of vibration.

As shown in FIG. 4, as angles θx1 to θx4 each increase toward 90 degrees, the X-axis vibration acceleration level decreases. The FIG. 4 data show that propagation of vibration along vibration axis A of the blower 155 is advantageously suppressed when each of the respective directions in which the springs extend is not close to the direction V along the vibration axis A.

In this connection, the X-axis vibration acceleration level is low also in Experimental Example 2. However, blower 155 experienced larger swings during transportation in a support structure of Experimental Example 2. In the elastic support structure of Experimental Example 1, on the other hand, blower 155 experienced smaller swings during transportation.

These results show the following. When the first through fourth springs are suspended, as represented by the elastic support structure of Experimental Example 1, shifting each of the first through fourth directions an angle that is greater than or equal to 45 degrees but less than 90 degrees away from the direction V along the vibration axis A is superior in suppressing both the propagation of vibration along the X-axis (vibration axis A) and the swinging of blower 155 during transportation.

### INDUSTRIAL APPLICABILITY

An elastic support structure according to the present disclosure described above reduces propagation of vibration from a blower, thus reducing noise. The elastic support structure according to the present disclosure is applicable to a fuel cell system.

Specifically, the above elastic support structure can be applied to the fuel cell system that includes a fuel cell including a stack, and a blower that supplies oxidizer gas to the stack, for the purpose of supporting the blower. Thus noise of the fuel cell system can be reduced. This effect is advantageous particularly when the fuel cell system is installed outdoors.

### REFERENCE MARKS IN THE DRAWINGS

100: elastic support structure
111, 112, 113, 114: spring
121, 122, 123, 124, 171, 172, 173, 174: position
150: object
155: blower
156: diaphragm
160: fixed part

## Claims

1. An elastic support structure (100) comprising:
an object (150) including a blower (155), the blower (155) having a vibration axis, wherein:
the blower (155) includes a diaphragm (156); and
the diaphragm (156) vibrates along the vibration axis,
**characterized by**
a first spring (111);
a second spring (112);
a third spring (113); and
a fourth spring (114),
wherein
the object (150) is suspended by the first spring (111), the second spring (112), the third spring (113), and the fourth spring (114),
the first spring (111) is connected to a first position (121) of the object,
the second spring (112) is connected to a second position (122) of the object,
the third spring (113) is connected to a third position (123) of the object,
the fourth spring (114) is connected to a fourth position (124) of the object,
a virtual quadrangle is defined when viewed vertically from above, with the first position (121), the second position (122), the third position (123), and the fourth position (124) being connected by virtual line segments,
the first spring (111) extends from the first position (121) in a first direction to be away from the virtual quadrangle,
the second spring (112) extends from the second position (122) in a second direction to be away from the virtual quadrangle,
the third spring (113) extends from the third position (123) in a third direction to be away from the virtual quadrangle,
the fourth spring (114) extends from the fourth position (124) in a fourth direction to be away from the virtual quadrangle,
the first direction, the second direction, the third direction, and the fourth direction are each more than 45 degrees off a direction along the vibration axis, and
the first direction, the second direction, the third direction, and the fourth direction each form an angle ranging between 30 degrees and 75 degrees, inclusive, with a vertical direction.

2. The elastic support structure (100) according to claim 1, wherein:
the first direction, the second direction, the third direction, and the fourth direction each form an identical angle with a vertical direction;
the virtual quadrangle viewed vertically from above is a rectangle including a first side and a second side;
the first spring (111) and the fourth spring (114) that extend are symmetric with respect to a straight line passing parallel to the first side through a center of the virtual quadrangle;
the second spring (112) and the third spring (113) that extend are symmetric with respect to the straight line passing parallel to the first side through the center of the virtual quadrangle;
the first spring (111) and the second spring (112) that extend are symmetric with respect to a straight line passing parallel to the second side through the center of the virtual quadrangle; and
the third spring (113) and the fourth spring (114) that extend are symmetric with respect to the straight line passing parallel to the second side through the center of the virtual quadrangle.

3. The elastic support structure (100) according to claim 1 or 2, wherein:
a resonance frequency of the first spring (111), a resonance frequency of the second spring (112), a resonance frequency of the third spring (113), and a resonance frequency of the fourth spring (114) are all lower than a frequency that drives the blower (155) between a starting operation and a stopping operation.

## Patentansprüche

1. Eine elastische Stützstruktur (100) umfassend:
ein Objekt (150) mit einem Gebläse (155), wobei das Gebläse (155) eine Vibrationsachse aufweist, wobei:
das Gebläse (155) eine Membran (156) aufweist; und
die Membran (156) entlang der Vibrationsachse vibriert,
**gekennzeichnet durch**
eine erste Feder (111);
eine zweite Feder (112);
eine dritte Feder (113); und
eine vierte Feder (114), wobei
das Objekt (150) durch die erste Feder (111), die zweite Feder (112), die dritte Feder (113) und die vierte Feder (114) aufgehängt ist,
die erste Feder (111) mit einer ersten Position (121) des Objekts verbunden ist,
die zweite Feder (112) mit einer zweiten Position (122) des Objekts verbunden ist,
die dritte Feder (113) ist mit einer dritten Position (123) des Objekts verbunden,
die vierte Feder (114) ist mit einer vierten Position (124) des Objekts verbunden,
ein virtuelles Viereck definiert wird, wenn man es vertikal von oben betrachtet, wobei die erste Position (121), die zweite Position (122), die dritte Position (123) und die vierte Position (124) durch virtuelle Liniensegmente verbunden sind,
die erste Feder (111) sich von der ersten Position (121) in eine erste Richtung erstreckt, um von dem virtuellen Viereck entfernt zu sein,
die zweite Feder (112) sich von der zweiten Position (122) in eine zweite Richtung erstreckt, um von dem virtuellen Viereck entfernt zu sein,
die dritte Feder (113) sich von der dritten Position (123) in eine dritte Richtung erstreckt, um von dem virtuellen Viereck entfernt zu sein,
die vierte Feder (114) sich von der vierten Position (124) in eine vierte Richtung erstreckt, um von dem virtuellen Viereck entfernt zu sein,
die erste Richtung, die zweite Richtung, die dritte Richtung und die vierte Richtung jeweils um mehr als 45 Grad von einer Richtung entlang der Vibrationsachse abweichen, und
die erste Richtung, die zweite Richtung, die dritte Richtung und die vierte Richtung jeweils einen Winkel zwischen einschließlich 30 Grad und 75 Grad mit einer vertikalen Richtung bilden.

2. Die elastische Stützstruktur (100) gemäß Anspruch 1, wobei:
die erste Richtung, die zweite Richtung, die dritte Richtung und die vierte Richtung jeweils einen identischen Winkel mit einer vertikalen Richtung bilden;
das virtuelle Viereck senkrecht von oben gesehen ein Rechteck ist, das eine erste Seite und eine zweite Seite enthält;
die erste Feder (111) und die vierte Feder (114), die sich erstrecken, in Bezug auf eine gerade Linie, die parallel zu der ersten Seite durch einen Mittelpunkt des virtuellen Vierecks verläuft, symmetrisch sind;
die zweite Feder (112) und die dritte Feder (113), die sich erstrecken, in Bezug auf die gerade Linie, die parallel zu der ersten Seite durch den Mittelpunkt des virtuellen Vierecks verläuft, symmetrisch sind;
die erste Feder (111) und die zweite Feder (112), die sich erstrecken, in Bezug auf eine gerade Linie, die parallel zu der zweiten Seite durch den Mittelpunkt des virtuellen Vierecks verläuft, symmetrisch sind; und
die dritte Feder (113) und die vierte Feder (114), die sich erstrecken, in Bezug auf die gerade Linie, die parallel zu der zweiten Seite durch den Mittelpunkt des virtuellen Vierecks verläuft, symmetrisch sind.

3. Die elastische Stützstruktur (100) gemäß Anspruch 1 oder 2, wobei:
eine Resonanzfrequenz der ersten Feder (111), eine Resonanzfrequenz der zweiten Feder (112), eine Resonanzfrequenz der dritten Feder (113) und eine Resonanzfrequenz der vierten Feder (114) alle niedriger sind als eine Frequenz, die das Gebläse (155) zwischen einem Startvorgang und einem Stoppvorgang antreibt.

## Revendications

1. Structure de support élastique (100) comprenant :
un objet (150) comprenant un ventilateur (155), le ventilateur (155) présentant un axe de vibration,
dans lequel :
le ventilateur (155) comprend un diaphragme (156) ; et
le diaphragme (156) vibre le long de l'axe de vibration,
**caractérisé par**
un premier ressort (111) ;
un deuxième ressort (112) ;
un troisième ressort (113) ; et
un quatrième ressort (114),
où
l'objet (150) est suspendu par le premier ressort (111), le deuxième ressort (112), le troisième ressort (113) et le quatrième ressort (114),
le premier ressort (111) est connecté à une première position (121) de l'objet,
le deuxième ressort (112) est relié à une deuxième position (122) de l'objet,
le troisième ressort (113) est connecté à une troisième position (123) de l'objet,
le quatrième ressort (114) est connecté à une quatrième position (124) de l'objet,
un quadrilatère virtuel est défini lorsqu'il est vu verticalement depuis le haut, la première position (121), la deuxième position (122), la troisième position (123) et la quatrième position (124) étant reliées par des segments de ligne virtuels,
le premier ressort (111) s'étend depuis la première position (121) dans une première direction pour s'éloigner du quadrilatère virtuel,
le deuxième ressort (112) s'étend depuis la deuxième position (122) dans une deuxième direction pour s'éloigner du quadrilatère virtuel,
le troisième ressort (113) s'étend depuis la troisième position (123) dans une troisième direction pour s'éloigner du quadrilatère virtuel,
le quatrième ressort (114) s'étend depuis la quatrième position (124) dans une quatrième direction pour s'éloigner du quadrilatère virtuel,
la première direction, la deuxième direction, la troisième direction et la quatrième direction sont chacune à plus de 45 degrés d'une direction le long de l'axe de vibration, et
la première direction, la deuxième direction, la troisième direction et la quatrième direction forment chacune un angle compris entre 30 degrés et 75 degrés, inclus, avec une direction verticale.

2. Structure de support élastique (100) selon la revendication 1, dans laquelle :
la première direction, la deuxième direction, la troisième direction et la quatrième direction forment chacune un angle identique avec une direction verticale ;
le quadrilatère virtuel vu verticalement depuis le haut est un rectangle comprenant un premier côté et un deuxième côté ;
le premier ressort (111) et le quatrième ressort (114) qui s'étendent sont symétriques par rapport à une ligne droite passant parallèlement au premier côté par un centre du quadrilatère virtuel ;
le deuxième ressort (112) et le troisième ressort (113) qui s'étendent sont symétriques par rapport à la ligne droite passant parallèlement au premier côté par le centre du quadrilatère virtuel ;
le premier ressort (111) et le deuxième ressort (112) qui s'étendent sont symétriques par rapport à une ligne droite passant parallèlement au deuxième côté par le centre du quadrilatère virtuel ; et
le troisième ressort (113) et le quatrième ressort (114) qui s'étendent sont symétriques par rapport à la ligne droite passant parallèlement au deuxième côté par le centre du quadrilatère virtuel.

3. Structure de support élastique (100) selon les revendications 1 ou 2, dans laquelle :
une fréquence de résonance du premier ressort (111), une fréquence de résonance du deuxième ressort (112), une fréquence de résonance du troisième ressort (113), et une fréquence de résonance du quatrième ressort (114) sont toutes inférieures à une fréquence qui entraîne le ventilateur (155) entre une opération de démarrage et une opération d'arrêt.
